# FASCICULE DE BREVET EUROPEEN

(11) **EP 1 293 939 B1**
(45) Date de publication et mention de la délivrance du brevet: **21.11.2007**
(21) Numéro de dépôt: 02354142.8
(22) Date de dépôt: 13.09.2002
(51) Int. Cl.: G07C 9/00, G06F 1/00

(54) **Identification sécurisée par données biométriques**
Gesicherte Identifizierung durch biometrische Daten
Secure identification with biometric data

(30) Priorité: 14.09.2001 FR 0111920
(43) Date de publication de la demande: 19.03.2003
(73) Titulaire: STMicroelectronics S.A., 92120 Montrouge (FR)
(72) Inventeur: Wuidart, Luc, 83910 Pourrières (FR)
(74) Mandataire: de Beaumont, Michel

(56) Documents cités:
- EP-A- 0 622 780
- EP-A- 0 924 657
- WO-A-00/38118
- WO-A-00/45551
- WO-A-00/65770
- US-A- 6 161 213

## Description

La présente invention concerne l'identification ou authentification d'un utilisateur d'un dispositif électronique par des données biométriques le concernant. L'invention concerne plus particulièrement les dispositifs portables (par exemple de type carte à puce ou clé électronique) exploitant une identification biométrique d'un utilisateur pour autoriser ou non l'accès à une fonction quelconque (par exemple, le démarrage d'un véhicule, l'ouverture d'une issue, etc.).

Parmi les données biométriques utilisées, on trouve essentiellement la reconnaissance de l'iris, du visage ou la reconnaissance d'empreinte digitale. Cette dernière application est la plus courante en raison de sa facilité d'exploitation sur des dispositifs portables de type porte clé ou analogue.

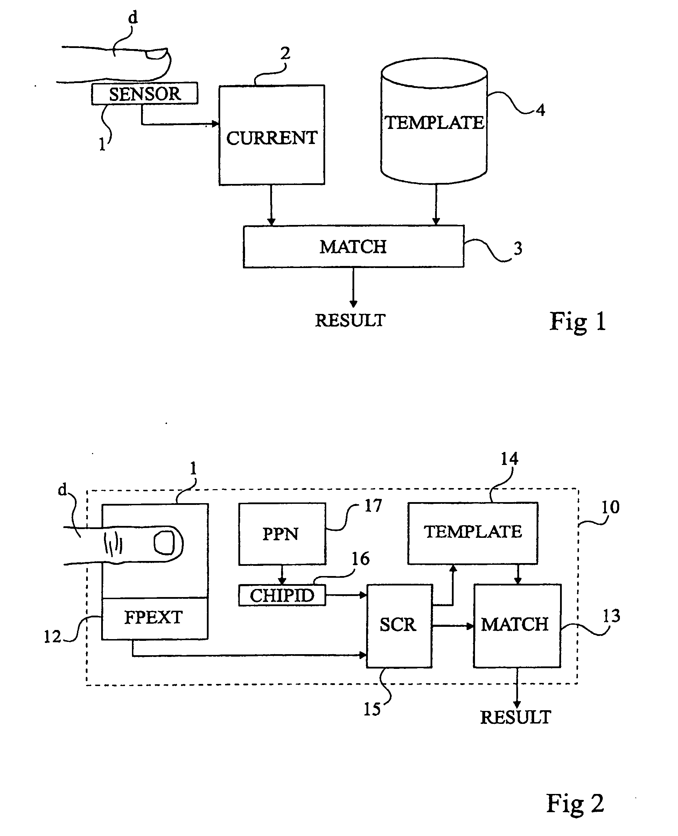

La figure 1 représente, sous la forme de schéma bloc et de façon très schématique, un exemple classique d'architecture d'un système d'identification par reconnaissance d'empreinte digitale.

Un tel système comprend essentiellement un capteur 1 (SENSOR) d'une empreinte digitale d'un doigt d posé sur une surface sensible de ce capteur. Le capteur prend une image de l'arrangement papillaire du doigt, la numérise et la traite, pour obtenir une cartographie de minuties. Les minuties représentent des points caractéristiques de l'arrangement papillaire permettant de considérer deux empreintes comme identiques (généralement, on considère qu'il y a concordance entre deux empreintes digitales lorsque le nombre de minuties identiques dans les deux arrangements papillaires est compris entre 8 et 17).

La cartographie des minuties de l'empreinte courante est stockée (généralement de façon temporaire) dans une mémoire 2, affectée à l'image courante (CURRENT). Cette image courante est comparée par un algorithme adapté (bloc 3, MATCH) par rapport à des cartographies de minuties de référence constituant des modèles (TEMPLATE) stockés dans une base de données 4 ou analogue. Dans l'application particulière de l'invention aux dispositifs d'identification localisés ou portables, la base de données de référence est réduite dans la mesure où un faible nombre d'utilisateurs (généralement moins de 10) ont besoin d'être identifiés. La fonction algorithmique de comparaison 3 délivre un résultat (RESULT) indicateur d'une authentification ou d'une absence d'authentification de l'utilisateur ayant posé son doigt sur le capteur.

Un problème qui se pose dans les systèmes d'identification par données biométriques est lié à la mémorisation des modèles de référence. En particulier, connaissant une empreinte de référence stockée dans la base de donnée 4, un fraudeur éventuel est ensuite capable de restituer un fichier adapté au bloc de mémorisation d'image courante 2 ou au comparateur 3 afin de forcer une identification correcte.

Les piratages ou "attaques" les plus fréquentes sont de récupérer l'empreinte lors de sa capture (en sortie du capteur 1) ou de recopier le contenu d'une empreinte de référence stockée dans la base 4.

On a déjà proposé de stocker les modèles d'empreinte de façon codée ou cryptée pour rendre plus difficile le piratage. Ce genre de codage est utilisé pour des modèles d'empreintes stockées à distance (par exemple, sur une banque de données accessibles par un réseau public de type Internet). Toutefois, un tel codage ne fournit pas de résultat pleinement satisfaisant et est de plus très mal adapté à une authentification locale. En particulier, il suffit à un pirate de connaître le contenu d'un fichier qu'il soit crypté ou non pour fournir ce fichier au comparateur d'authentification.

Le document WO-A-0042577 décrit un procédé et un dispositif pour une transmission sécurisée de données biométriques d'authentification par un réseau de type Internet. Selon ce document, on associe, à une caméra constituant un capteur d'images d'iris, un identifiant qui lui est propre. Cet identifiant propre à la caméra sert à brouiller l'image numérique de données biométriques avant sa transmission sur le réseau vers un serveur distant. La comparaison des empreintes oculaires pour authentification est ici réalisée à distance du capteur, le serveur d'authentification disposant des moyens nécessaires pour décrypter l'image afin de la comparer à des modèles non cryptés. Un fraudeur peut toujours tromper le système s'il a pu se procurer une copie d'un modèle.

Un autre problème des systèmes d'identification par données biométriques est lié au caractère non-remplaçable (on parle généralement de données non-révocables) de ces données biométriques (par opposition à un code numérique confidentiel). Par conséquent, une fois qu'une empreinte a été récupérée par un pirate dans une base de données, le possesseur de l'empreinte ne peut plus l'utiliser. Or, le nombre de doigts ou d'yeux est limité.

Le document WO-A-00/65770 décrit un procédé d'identification par données biométriques dans lequel des données biométriques sont combinées avec une clé de chiffrement.

Le document US-A-6 161 213 décrit un circuit intégré pourvu d'un identifiant défini par des paramètres physiques du circuit.

La présente invention vise à proposer un procédé et un dispositif sécurisé d'identification par données biométriques qui pallient les inconvénients des procédés et systèmes connus. En particulier, l'invention vise à rendre les modèles de référence des fichiers biométriques inexploitables par un pirate éventuel.

L'invention vise également à proposer un système particulièrement adapté à des dispositifs portables.

L'invention vise également à éviter le recours à des serveurs distants pour identifier ou authentifier un utilisateur.

Pour atteindre ces objets et d'autres, la présente invention prévoit un procédé sécurisé d'identification par données biométriques comprenant l'étape de combiner des données biométriques numériques obtenues au moyen d'un capteur avec un identifiant d'une puce de circuit intégré contenue dans un dispositif commun au capteur.

Selon un mode de mise en oeuvre de la présente invention, l'identifiant de la puce est issu d'un réseau de paramètres physiques.

Selon un mode de mise en oeuvre de la présente invention, ladite combinaison est mise en oeuvre pour l'enregistrement de modèles de référence au moyen dudit capteur.

Selon un mode de mise en oeuvre de la présente invention, la comparaison d'une image biométrique courante par rapport à un modèle de référence s'effectue après combinaison de l'image avec ledit identifiant.

L'invention prévoit également un dispositif portable d'authentification d'un utilisateur à partir de données biométriques, comportant :
un capteur numérique de données biométriques ;
un réseau de paramètres physiques propres à une puce de circuit intégré du dispositif ;
un élément de combinaison d'un identifiant fourni par ledit réseau aux données numériques fournies par ledit capteur ;
un élément de mémorisation d'un ou plusieurs modèles de référence des données biométriques ; et
un élément de comparaison d'une donnée courante par rapport à l'un des modèles de référence.

Selon un mode de réalisation de la présente invention, au moins le réseau de paramètres physiques et le brouilleur sont intégrés sur une même puce.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, sous forme de blocs et de façon très schématique, un système classique d'identification par comparaison de données biométriques.
La figure 2 représente, sous forme de schéma-blocs, un mode de réalisation d'un dispositif portable d'identification par données biométriques selon la présente invention.

Les mêmes éléments ont été désignés par les mêmes références aux différentes figures. Pour des raisons de clarté, seuls les étapes du procédé et les constituants du dispositif qui sont nécessaires à la compréhension de l'invention ont été représentés aux figures et seront décrits par la suite. En particulier, l'obtention des images biométriques et leur numérisation en vue d'une comparaison sont connues et ne font pas l'objet de la présente invention. De plus, l'exploitation du résultat de l'identification (autorisation d'accès, mise en fonctionnement, etc.) n'est pas modifiée par la mise en oeuvre de l'invention.

Une caractéristique de la présente invention est de combiner, au sein d'un dispositif portable d'identification ou authentification par comparaison de données biométriques, le fichier de données biométriques proprement dit avec un identifiant propre au capteur, plus précisément, propre à un circuit intégré du dispositif portable, et de stocker, dans le dispositif portable lui-même, des modèles de référence de fichiers biométriques. Selon l'invention, ces modèles de référence sont liés au capteur local du dispositif portable en étant combinés, avant stockage, avec l'identifiant du capteur.

La figure 2 représente, sous forme de schéma-blocs et de façon très schématique, un mode de réalisation d'un dispositif portable 10 d'identification par comparaison de données biométriques. Dans cet exemple, il s'agit d'une comparaison d'empreintes digitales. On notera toutefois que l'invention s'applique plus généralement à tout type de données biométriques, par exemple, une reconnaissance d'iris (de motifs oculaires), pourvu que l'obtention et le stockage des données biométriques soient compatibles avec une utilisation localisée (de préférence, portable).

Selon l'invention, on utilise un capteur 1 associé à un dispositif 12 d'extraction et de numérisation (FPEXT) des minuties de l'arrangement papillaire d'un doigt d posé sur le capteur 1. La cartographie de minuties ou tout autre fichier de données caractéristiques de l'empreinte digitale (par exemple, l'image binarisée du doigt) est envoyé à un dispositif de brouillage, cryptage ou, plus généralement, combinaison 15 (SCR) propre à l'invention. Sur une autre entrée, le dispositif 15 reçoit un identifiant (CHIPID) propre à un circuit intégré du dispositif 10. Il s'agit, par exemple, d'un mot binaire stocké (de préférence, de façon temporaire) dans un registre 16 dédié. Le registre 16 contient alors l'identifiant uniquement lors d'une authentification ou d'un stockage d'un modèle.

Selon l'invention, l'identifiant du circuit intégré est issu d'un réseau de paramètres physiques 17 (PPN) que comporte le dispositif électronique 10. Un tel réseau de paramètres physiques est lié à la fabrication d'une puce de circuit intégré. Pour la mise en oeuvre de l'invention, on pourra recourir à tout réseau de paramètres physiques connu. Il s'agit, par exemple, d'un réseau mesurant des paramètres électriques, par exemple, d'une mesure d'une tension seuil d'un transistor, d'une mesure d'une résistance ou d'une capacité parasite, d'une mesure de courant produit par une source de courant, d'une mesure d'une constante de temps (par exemple, un circuit RC), d'une mesure d'une fréquence d'oscillation etc. Comme ces caractéristiques sont sensibles aux dispersions technologiques et de procédé de fabrication, on peut considérer que le ou les paramètres électriques pris en compte sont propres à une fabrication et constituent une signature des circuits intégrés issus de cette fabrication.

Les signaux issus du réseau de paramètres physiques 17 sont, le cas échéant, convertis en signaux numériques pour être stockés temporairement dans le registre 16 et exploitables en tant que codes binaires.

En guise de réseaux de paramètres physiques, on pourra également recourir à des circuits faisant appel à une mesure temporelle, par exemple, en mesurant le temps de lecture-écriture d'une mémoire de type EEPROM. Un exemple de réseau de paramètres physiques de ce type est décrit dans le brevet américain N° 5818738.

Selon l'invention, le résultat issu du brouilleur 15 est envoyé dans un élément de comparaison 13 (MATCH), ou dans un élément de mémorisation 14 d'un ou plusieurs modèles de référence (TEMPLATE). En effet, selon l'invention, on compare les données brouillées. Par conséquent, lors de la mémorisation d'un modèle de référence, cette mémorisation doit être effectuée au moyen du capteur 1 du dispositif portable 10 en étant brouillée par les quantités issues du réseau de paramètres physiques 17. La sélection entre une mémorisation dans l'élément 14 ou une comparaison par l'élément 13 de la signature biométrique ou analogue contenue dans l'élément 15 dépend de la phase d'utilisation du dispositif. Tout moyen de sélection du mode de fonctionnement (par exemple, un commutateur) pourra être envisagé.

Selon l'invention, pour qu'il y ait authentification d'une empreinte digitale et fourniture d'un résultat RESULT valide par le comparateur 13, il faut non seulement le doigt d de l'utilisateur mais également le capteur avec lequel son empreinte a été mémorisée comme référence. Cette caractéristique de l'invention confère une fiabilité accrue au dispositif portable.

En effet, même si un pirate parvient à obtenir le fichier d'empreinte en sortie du dispositif 12, il ne pourra utiliser ce fichier qu'avec la puce du dispositif 10, faute de quoi la comparaison (13) ne sera jamais validée car il manquera toujours l'identifiant CHIPID. De plus, si un pirate parvient à obtenir le fichier de référence brouillé dans l'élément 14, il ne peut l'utiliser que pour le dispositif 10 d'où il a prélevé le fichier. Or, pour le prélever, il a forcément dû détériorer le dispositif 10 qui est alors rendu inutilisable. Au pire, il pourra uniquement se servir du fichier pour l'authentification avec ce dispositif 10.

De préférence, les liaisons entre les éléments 1, 12, et 15, 17 du dispositif 10 sont minimales en terme de distance. De préférence, tous ces éléments sont intégrés dans un même circuit, ce qui supprime tout risque de piratage par accès à des données.

On notera cependant que même si un accès est possible par un pirate, par exemple, sur la liaison du capteur au brouilleur 15, cela ne lui permet pas de reconstituer un modèle d'empreinte pour être authentifiable par la suite. En effet, la comparaison s'effectue sur la base de fichiers "brouillés" et le pirate ne connaît pas l'identifiant CHIPID.

Selon un mode de réalisation préféré, tous les éléments du dispositif 10 sont placés dans une enceinte sécurisée en ce sens que les liaisons internes sont protégées contre des accès extérieurs par mesure électrique.

Un avantage de la présente invention est qu'elle s'applique à tout type de mesure biométrique et qu'elle ne nécessite aucune modification des algorithmes classiques d'exploitation de ces mesures.

Un autre avantage de l'invention est qu'elle évite que l'empreinte d'un utilisateur soit stockée de manière lisible. Un utilisateur ne risque alors plus d'être dissuadé d'utiliser un tel dispositif par la crainte de voir ses empreintes réutilisées de façon malveillante. En particulier, même connaissant la base de données des modèles, on ne peut pas retrouver les données d'origine, le brouillage étant "unidirectionnel".

Un autre avantage de l'invention est qu'en stockant les empreintes combinées ou brouillées, on résout le problème de la non-révocation des données biométriques. Une empreinte brouillée selon l'invention devient révocable. Il suffit de changer l'identifiant du capteur et de reconstituer la base de données.

Bien entendu, la présente invention est susceptible de diverses variantes et modifications qui apparaîtront à l'homme de l'art. En particulier, bien que l'invention ait été décrite avec un exemple d'application à l'identification par reconnaissance d'empreintes digitales, celle-ci s'applique également à la reconnaissance d'empreintes oculaires (reconnaissance d'iris) et plus généralement à toute donnée biométrique compatible avec un capteur de taille suffisamment faible pour être associé à un dispositif portable.

De plus, bien que l'invention ait été plus particulièrement décrite en relation avec des éléments matériels, celle-ci pourra être mise en oeuvre de façon logicielle pourvu que le dispositif portable intègre le microprocesseur et l'ensemble des périphériques (mémoire, indicateur de résultat, etc.) nécessaires.

Enfin, la combinaison des données biométriques à un identifiant propre à la puce de circuit intégré pourra être effectuée au moyen de tout réseau de paramètres physiques. Par exemple, on pourra utiliser un circuit d'extraction de paramètres physiques tel que décrit dans la demande de brevet français n°01/04586. L'adaptation d'un tel circuit d'extraction dans un dispositif portable de l'invention est à la portée de l'homme du métier à partir des indications fonctionnelles données ci-dessus.

## Revendications

1. Procédé sécurisé d'identification par données biométriques par comparaison d'une image biométrique courante par rapport à un modèle de référence, obtenus au moyen d'un capteur (1), **caractérisé en ce que** la comparaison s'effectue après combinaison de l'image courante avec un identifiant (CHIPID) d'une puce de circuit intégré contenue dans un dispositif commun au capteur, ladite combinaison étant également mise en oeuvre pour l'enregistrement de modèles de référence au moyen du capteur et ledit identifiant (CHIPID) de la puce étant issu d'un réseau de paramètres physiques (17) propres à une puce de circuit intégré du dispositif.

2. Dispositif portable (10) d'authentification d'un utilisateur à partir de données biométriques, comportant un capteur numérique (1) de données biométriques, **caractérisé en ce qu'**il comporte :
un réseau de paramètres physiques (17) propres à une puce de circuit intégré du dispositif ;
un élément de combinaison (15) d'un identifiant fourni par ledit réseau aux données biométriques fournies par ledit capteur ;
un élément de mémorisation (14) d'un ou plusieurs modèles de référence des données biométriques combinés audit identifiant ; et
un élément de comparaison d'une donnée courante combinée audit identifiant par rapport à un desdits modèles de référence mémorisés.

3. Dispositif selon la revendication 2, dans lequel au moins le réseau de paramètres physiques (17) et l'élément de combinaison (15) sont intégrés sur une même puce.

## Claims

1. A secure method of identification by biometric data by combining a current biometric image with respect to a reference template obtained by means of a sensor (1), **characterized in that** the comparison is performed after combining the current image with an identifier (CHIPID) of an integrated circuit chip contained in a device common to the sensor, said combination being also implemented for the storage of reference templates by means of said sensor and said chip identifier (CHIPID) being derived from a physical parameter network (17) specific to a chip of the integrated circuit of the device.

2. A portable device (10) for authenticating a user based on biometric data, comprising a digital biometric data sensor (1), **characterized in that** it includes:
a physical parameter network (17) specific to an integrated circuit chip of the device;
an element (15) for combining an identifier provided by said network with the digital data provided by said sensor;
an element (14) for storing one or several reference templates of the biometric data combined with said identifier; and
an element (13) for comparing a current datum with said identifier with respect to one of said stored reference templates.

3. The device of claim 2, wherein at least the physical parameter network (17) and the scrambler (15) are integrated on a same chip.

## Patentansprüche

1. Sicheres Verfahren zur Identifizierung anhand biometrischer Daten durch Vergleichen eines derzeitigen biometrischen Abbilds mit einer Referenzvoriage,die durch einen Sensor (1) erhalten wurde, **dadurch gekennzeichnet, dass** der Vergleich durchgefuhrt wird nach dem Kombinieren des derzeitigen Abbildes mit einer Identifizierung (CHIPID) eines integrierten Schaltungschips, der in einer Vorrichtung des Sensors enthalten ist, wobei die Kombination auch für die Speicherung von Referenzvorlagen mittels des Sensors implementiert wird, und wobei die Identifizierung (CHIPID) des Chips abgeleitet wird aus einem Netzwerk physikalischer Parameter (17), die einem Chip der integrierten Schaltung der Vorrichtung eigen sind.

2. Portable Vorrichtung (10) für die Authentifizierung eines Nutzers basierend auf biometrischen Daten, wobei die Vorrichtung einen digitalen biometrischen Datensensor (1) aufweist, **gekennzeichnet durch**:
ein Netzwerk physikalischer Parameter (17), die für einen integrierten Schaltungschip der Vorrichtung spezifisch sind;
ein Element (15) zum Kombinieren einer Identifizierung, die **durch** das Netzwerk vorgesehen wird, mit den biometrischen Daten, die **durch** den Sensor vorgesehen werden;
ein Element (14) zum Speichern von einer oder mehreren Referenzvorlagen der biometrischen Daten kombiniert mit der Identifizierung; und
ein Element (13) zum Vergleichen eines derzeitigen Datensatzes kombiniert mit der Identifizierung mit der oder den gespeicherten Referenzvorlage(n).

3. Vorrichtung nach Anspruch 2, wobei wenigstens das Netzwerk aus physikalischen Parametern (17) und das Element (15) zum Kombinieren auf demselben Chip integriert sind.
